# EUROPÄISCHE PATENTSCHRIFT

(11) **EP 0 836 879 B1**
(45) Veröffentlichungstag und Bekanntmachung des Hinweises auf die Patenterteilung: **30.05.2001**
(21) Anmeldenummer: 97114526.3
(22) Anmeldetag: 22.08.1997
(51) Int. Cl.: B01D 61/16, F28G 9/00, C02F 1/40

(54) **Verfahren und Vorrichtung zum Entfernen von Ölverschmutzungen aus Kühlwassersystemen**
Method and apparatus for removing oil contaminants from cool water systems
Procédé et dispositif pour éliminer des contaminants d'huile d'un système d'eau de refroidissement

(30) Priorität: 16.10.1996 DE 19642640
(43) Veröffentlichungstag der Anmeldung: 22.04.1998
(73) Patentinhaber: Therm-Service für Kraftwerke und Industrie GmbH, 21217 Seevetal (DE)
(72) Erfinder: Borchardt, Heinz-Peter, 21220 Seevetal (DE)
(74) Vertreter: von Raffay, Vincenz, Dipl.-Ing.

(56) Entgegenhaltungen:
- DE-A- 3 207 279
- DE-C- 4 411 691
- GB-A- 1 098 169
- US-A- 5 114 576

## Beschreibung

Die Erfindung betrifft ein Verfahren und eine Vorrichtung zum Entfernen von Ölverschmutzungen aus insbesondere geschlossenen Kühlwassersystemen.

In derartigen Kühlwassersystemen, beispielsweise eines Kraftwerkes, kommt es vor, dass als "Störfall" Schmieröl in das Kühlwassersystem gelangt. Dieses Öl setzt sich an allen Wasser-benetzten Oberflächen des Systems ab, insbesondere auch an den Wärmeübertragungsflächen, was zu einer deutlichen Verschlechterung des Wärmeüberganges und damit zu einer unzulässigen Verminderung der Kühlleistung führt.

Durch einfaches Auswechseln des gesamten im Kühlwasserkreislauf befindlichen Wassers würde auch mit nachgeschalteten Spülungen die erforderliche, weitgehende Reinigung des Systems nicht erzielt werden können. Darüber hinaus wäre dieses Vorgehen wegen der beträchtlichen Wassermenge sehr unwirtschaftlich. Es würde insbesondere aber auch eine Betriebsunterbrechung bedingen, die erhebliche Kosten verursacht.

Der Erfindung liegt nun die Aufgabe zugrunde, ein Verfahren der eingangs genannten Art zu schaffen, das eine Betriebsunterbrechung vermeidet und mit vertretbaren Kosten die Entfernung des Öls und damit die Reinigung des Kühlwassersystems ermöglicht. Diese Aufgabe wird grundsätzlich durch den Anspruch 1 gelöst.

Erfindungsgemäss wird also ein Bypasskreislauf mit einem geringen Gesamtvolumen geschaffen. Das in diesem Kreislauf umgewälzte Wasser hat ein Volumen von wenigen Prozenten desjenigen im Kühlwassersystem.

Es wird chargenweise verschmutztes Kühlwasser aus dem Kühlwassersystem entnommen und entsprechend chargenweise gereinigtes Wasser, das einen Emulgator enthält, wieder zugeführt. In dem Bypasskreislauf wird das verunreinigte Wasser mit dem Emulgator und dem emulgierten Öl im Kreislauf gefördert. Aus den im Crossflow betriebenen Membranfiltern gelangt Filtrat vorzugsweise in einen Permeatbehälter (Anspruch 2), aus dem es dann chargenweise wieder in das Kühlsystem eingespeist wird.

Der Vorlagebehälter dient der Aufnahme des Schmutzkonzentrats. Hier erfolgt auch die Abscheidung von Öltröpfchen oder von frei aufschwimmendem Öl mit Hilfe eines Skimmers, eines Koasleszors oder eines entsprechenden Gerätes, je nach Art und Zusammensetzung der Verschmutzung. Die Vorrichtung, die den Bypasskreislauf bildet, stellt die Schadstoffsenke für die Ölverschmutzung des Kühlwassersystems dar. Die Reinigung des Kühlwassersystems kann ohne Unterbrechung erfolgen. Der Reinigungsvorgang wird solange in dem Bypass-System aufrechterhalten, bis der gewünschte Reinigungsgrad erreicht ist. Als Membranfilter, von denen vorzugsweise mehrere parallel und/oder in Reihe geschaltet werden, sind Microfiltrations-Membranelemente eingesetzt, die im Crossflow-bzw. Querstromverfahren arbeiten. Die Membranen werden daher tangential angeströmt, wobei nur ein Teilstrom die Membran passiert. Dieser gereinigte Teilstrom, der noch Emulgator enthält, wird, wie gesagt, dem Kühlwassersystem wieder zugeführt.

In vorteilhafter Weise wird der Emulgator zu Beginn eines Reinigungsvorganges dem Permeatbehälter zugegeben (Anspruch 3).

In besonders vorteilhafter Weise arbeitet das Verfahren so wie in Anspruch 4 angegeben, wobei die Vorrichtung grundsätzlich so aufgebaut ist, wie in Anspruch 7 definiert. Das in dem Permeatbehälter befindliche Filtrat wird im Kreis gefördert, bis eine bestimmte Menge vorhanden ist und der Schwimmer dieses signalisiert. Das Schliessen eines Ventils unterbricht die Förderung im Kreislauf, so dass der Druck in Richtung des Kühlwassersystems ansteigt und schliesslich ein Rückschlagventil öffnet und so eine Förderung zurück ins Kühlwassersystem stattfindet. Gleichzeitig oder zeitlich kurz versetzt wird verschmutztes Wasser aus dem Kühlwassersystem entnommen und dem Vorlagebehälter zugeführt.

Die Membranfilter müssen von Zeit zu Zeit gereinigt werden. Dieses geschieht grundsätzlich so, wie in Anspruch 5 angegeben.

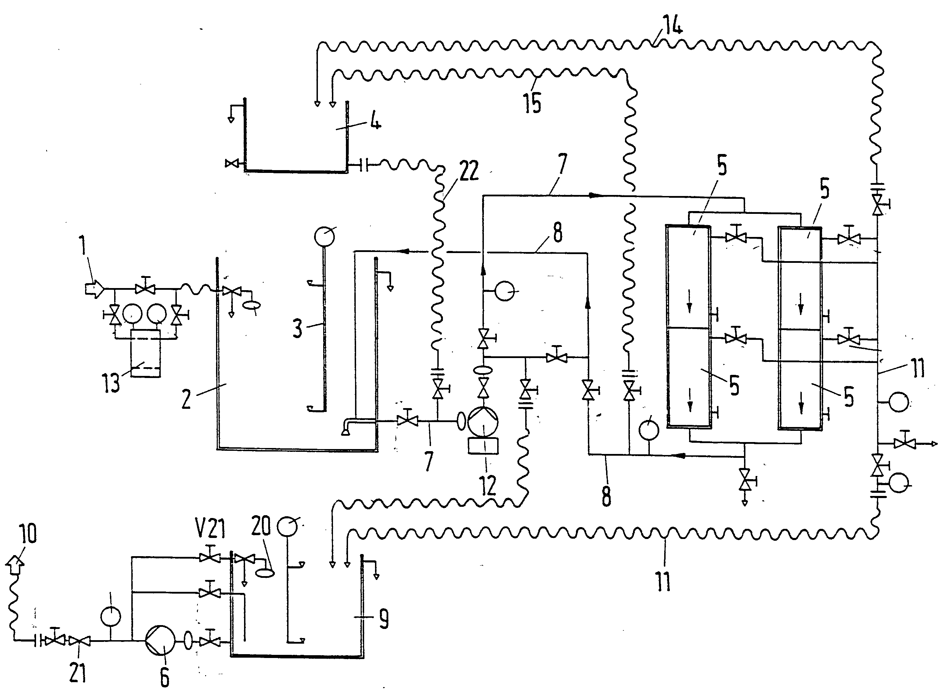

Im folgenden wird die Erfindung unter Hinweis auf die Zeichnung anhand eines Ausführungsbeispieles näher erläutert.

In der einzigen Figur ist schematisch ein Schaltbild zur Durchführung eines bestimmten erfindungsgemäßen Verfahrens dargestellt. Gezeichnet ist der wesentliche Bypasskreislauf.

Bei 1 wird das verschmutzte Kühlwasser aus dem Kühlwassersystem (nicht gezeigt) beispielsweise eines Reaktors entnommen. Vorgeschaltet sind noch ein Druckausgleichsbehälter (nicht gezeigt) und ggf. ein Zwischenkühlsystem (nicht gezeigt).

Das verschmutzte Kühlwasser gelangt in einen Vorlagebehälter 2 mit einer Trennwand 3, die der Beruhigung dient. Durch eine Pumpe 12 wird das verschmutzte Kühlwasser über eine Leitung 7 zu einer Gruppe von Membranfiltern 5 gefördert, von denen jeweils zwei parallel und in Reihe geschaltet sind. Das Schmutzkonzentrat, das nicht durch die Membranen gelangt, wird über eine Leitung 8 zurück zum Vorlagebehälter 2 gefördert. Diese Förderung erfolgt fortlaufend im Kreislauf.

Das Permeat gelangt über eine Leitung 11 zu einem Permeatbehälter 9.

Der Permeatbehälter 9 ist mit einer Pumpe 6 ausgerüstet, die das Permeat über ein Ventil V21 im Kreis fördert. Wenn der Schwimmer 20 eine bestimmte Niveauhöhe von Permeat anzeigt, schliesst das Ventil V21, so dass der Druck bei einem Rückschlagventil 21 ansteigt und schliesslich der Druck in dem Kühlwassersystem überschritten wird. Es wird dann Filtrat in das Kühlwassersystem bei 10 abgegeben. Gleichzeitig oder zeitlich kurz versetzt wird bei 1 verschmutztes Kühlwasser entnommen.

Bevor das verschmutzte Kühlwasser in den Vorlagebehälter 2 gelangt, wird es über einen Kerzenfilter 13 geführt, um partikuläre Bestandteile wie Rost und dergleichen zu entfernen.

Der Emulgator wird zu Beginn eines Arbeitens nach dem erfindungsgemässen Verfahren ebenfalls in dem Permeatbehälter 9 zugegeben. Wenn es von Zeit zu Zeit erforderlich ist, die Membranfilter 5 zu Reinigen, wird der Normalbetrieb unterbrochen und ein Reinigungsbehälter 4, in dem sich eine Reinigungslösung befindet, in den Kreislauf eingeschaltet. Zu diesem Zweck sind Leitungen 14, 15 und 22 vorgesehen.

Bei einem typischen Einsatz befinden sich ca. 90m³ Wasser in dem zu reinigenden Kühlwassersystem.

Die erfindungsgemässe Vorrichtung, deren Hauptkomponente als Mircofiltrationsanlage bezeichnet werden kann, wird dann zum Einsatz gebracht.

Dazu wird über die vorhandene Entwässerungsleitung des Druckausgleichsbehälters bei dem angenommenen Beispiel ca. 2,5 m³/h Kreislaufwasser dem Vorlagebehälter 2 zugeführt. Zum Schutz des Zwischenkühlkreislaufes vor unzulässigen Druckschwankungen ist der Abgang mit einem Magnetventil versehen. Der Zulauf zum Vorlagebehälter ist standgeregelt.

Mit Hilfe der Pumpe 12 werden ca. 100m³ pro Stunde aus dem Vorlagebehälter 2 über die Membranfilter 5 zurück in den Vorlagebehälter 2 gefördert. Dabei werden ca. 2,5m³/h Permeat in den Permeatbehälter 9 abgeleitet. Von hier aus fördert die Pumpe 6 in Abhängigkeit vom Füllstand im Permeatbehälter 9 das Permeat und für die Endreinigung über einen Aktivkohlefilter zurück in den Kühlkreislauf. Das Kreislaufwasser des Bypasskreislaufes (Microfiltrationsanlage) wird bis zu 10% Öl/Emulgator oder höher aufkonzentriert und muss einer entsprechenden Entsorgung zugeführt werden.

Bei einem Permeatanfall < 2m³/h wird eine Membranreinigung notwendig. Dazu wird eine Reinigungslösung über den Reinigungsbehälter 4 mit der Pumpe 12 durch die Membran im Kreislauf gefahren.

Nach erfolgtem Austrag des Öls aus dem Kühlwassersystem wird der Emulgator aus diesem System entfernt und so der ursprüngliche Zustand wieder erreicht. Dieses geschieht beispielsweise durch einen Aktivkohlefilter oder eine katalytische Oxidation.

Bei dem Emulgator handelt es sich um einen handelsüblichen.

## Patentansprüche

1. Verfahren zum Entfernen von Ölverschmutzungen aus Kühlwassersystemen, wobei dem Kühlwassersystem chargenweise Wasser entnommen und nach der Reinigung mit einem Emulgator für das Öl versetzt wieder zugeführt wird, um so die Entfernung von an Oberflächen im Kühlwassersystem angelagerten Öl zu unterstützen und wobei das dem Kühlwassersystem entnommene Wasser gereinigt wird, indem es zwischen einem Vorlagebehälter (2) und einem oder mehreren im Crossflow betriebenen Membranfiltern (5) im Kreis gepumpt wird, wodurch sich im Kreislauf emulgiertes Öl anreichert bis eine bestimmte Grenzkonzentration erreicht ist und die zirkulierende Flüssigkeit entsorgt wird, während das als Permeat anfallende, noch einen Teil des Emulgators enthaltende Wasser chargenweise in das Kühlwassersystem zurückgeführt wird, aus dem, nachdem das gesamte Wasser gereinigt ist, der Emulgator wieder entfernt wird.

2. Verfahren nach Anspruch 1, dadurch gekennzeichnet, daß die Ölverschmutzungen aus geschlossenen Kühlwassersystemen entfernt werden.

3. Verfahren nach Anspruch 1 oder 2, dadurch gekennzeichnet, daß der Emulgator in einem Permeatbehälter (9) zugegeben wird, der in eine Rückführleitung (10,11) von den Membranfiltern (5) zum Kühlwassersystem eingeschaltet ist.

4. Verfahren nach Anspruch 3, dadurch gekennzeichnet, daß das im Permeatbehälter (4) gesammette Permeat bei unterbrochener Rückführung in das Kühlwassersystem im Kreislauf durch den Permeatbehälter (9) gefördert wird.

5. Verfahren nach einem oder mehreren der vorstehenden Ansprüche, dadurch gekennzeichnet, daß zur Reinigung der Membranfilter (5) ein Reinigungsbehälter (4) mit Reinigungslösung gefüllt und bei unterbrochenem Normalbetrieb diese Reinigungslösung im Kreislauf durch den oder die Membranfilter und den Reinigungsbehälter gefördert und anschließend der oder die Membranfilter mit reinem Wasser nachgespült werden.

6. Verfahren nach Anspruch 1 oder 2, dadurch gekennzeichnet, daß der Emulgator nach erfolgter Reinigung durch Aktivkohle und/oder katalytische Oxidation oder ein anderes, destruktives Verfahren aus dem Kühlwassersystem entfernt wird.

7. Vorrichtung zur Durchführung des Verfahrens nach Anspruch 4, bei dem das entnommene Kühlwasser über einen Vorlagebehälter (2) und einen oder mehreren Membranfiltern (5) im Kreislauf gefördert wird, wobei die Förderung des Permeats von dem oder den Membranfiltern (5) über den Permeatbehälter(9)in den Kühlwasserkreislauf zurück durch eine Pumpe (6) erfolgt,
die Steuerung der Rückführung durch ein Schwimmerventil (20,21) in dem Permeatbehälter (9) erfolgt und in der Rückführleitung (10,11) zum Kühlwassersystem ein bei Überschreiten des Druckes im Kühlwassersystem öffnendes Rückschlagventil (21) vorgesehen ist.

## Claims

1. Process for removing oil pollution from cooling water systems, in which water is removed batchwise from the cooling water system and is fed back again after purification mixed with an emulsifier for the oil so as in this way to assist the removal of oil deposited on surfaces in the cooling water system and in which the water removed from the cooling water system is purified, in that it is pumped in cycle form between a reception tank (2) and one or more membrane filters operated in crossflow, so that oil emulsified in cycle form is concentrated up to a given limiting concentration and the circulating fluid is disposed of, whereas the water obtained as permeate and still containing part of the emulsifier is fed back batchwise to the cooling water system from which the emulsifier is removed again following the purification of all the water.

2. Process according to claim 1, characterized in that oil pollution is removed from closed cooling water systems.

3. Process according to claim 1 or 2, characterized in that the emulsifier is added to a permeate container (9), which is introduced into a recycling line (10, 11) from the membrane filters (5) to the cooling water system.

4. Process according to claim 3, characterized in that the permeate collected in the permeate container (9) in the case of an interrupted recycling is delivered to the cooling water system in cycle form through the permeate container (9).

5. Process according to one or more of the preceding claims, characterized in that for the cleaning of the membrane filters a cleaning container (4) is filled with cleaning solution and in the case of interrupted normal operation said cleaning solution is delivered in cycle form through the membrane filter or filters and the cleaning container and subsequently the membrane filter or filters are rinsed with clean water.

6. Process according to claim 1 or 2, characterized in that following purification by activated carbon and/or catalytic oxidation or some other destructive process, the emulsifier is removed from the cooling water system.

7. Apparatus for performing the process according to claim 4, in which the cooling water removed is delivered in cycle form via a reception tank (2) and one or more membrane filters (5), wherein the delivery of the permeate from the membrane filter or filters (5) via the permeate container (9) back into the cooling water cycle takes place by means of a pump (6) and the control of the recycling takes place through a float valve (20, 21) in the permeate container (9) and in the recycling line (10, 11) to the cooling water system is provided a check valve (21) opening on exceeding the pressure in the cooling water system.

## Revendications

1. Procédé pour éliminer des impuretés d'huile dans des systèmes d'eau de refroidissement, dans lequel on prélève de l'eau en discontinu du système d'eau de refroidissement et on la renvoie avec un décalage après le nettoyage avec un émulsifiant pour l'huile afin de soutenir ainsi l'élimination d'huile déposée sur des surfaces dans le système d'eau de refroidissement et dans lequel on nettoie l'eau prélevée du système d'eau de refroidissement en la pompant dans le circuit entre un récipient collecteur (2) et un ou plusieurs filtres à membranes (5) en fonctionnement Crossflow, ce qui fait que l'huile émulsionnée s'enrichit lors de la circulation jusqu'à atteindre une certaine concentration limite et on évacue le liquide circulant tandis qu'on renvoie en discontinu l'eau résultant comme perméat et contenant encore une partie de l'émulsifiant dans le système d'eau de refroidissement dont on retire l'émulsifiant après que toute l'eau soit nettoyée.

2. Procédé selon la revendication 1, caractérisé par le fait qu'on élimine les impuretés d'huile des systèmes d'eau de refroidissement fermés.

3. Procédé selon la revendication 1 ou 2, caractérisé par le fait qu'on ajoute l'émulsifiant dans un récipient à perméat (9) qui est placé dans une conduite de remise en circulation (10, 11) au système d'eau de refroidissement, des filtres à membranes (5).

4. Procédé selon la revendication 3, caractérisé par le fait qu'on transporte en circuit à travers le récipient à perméat (9), le perméat collecté dans le récipient à perméat (9), vers le système d'eau de refroidissement, alors que la remise en circulation est interrompue.

5. Procédé selon une ou plusieurs des revendications précédentes, caractérisé par le fait que, pour nettoyer les filtres à membranes (5), on remplit un récipient de nettoyage (4) avec une solution de nettoyage et, alors que le fonctionnement normal est interrompu, on transporte cette solution de nettoyage en circuit à travers le ou les filtres à membranes et le récipient de nettoyage et on rince ensuite le ou les filtres à membranes avec de l'eau pure.

6. Procédé selon la revendication 1 ou 2, caractérisé par le fait que, après avoir effectué le nettoyage, on élimine l'émulsifiant du système d'eau de refroidissement au moyen d'un charbon actif et/ou d'une oxydation catalytique ou d'un autre procédé destructif.

7. Dispositif pour la mise en oeuvre du procédé selon la revendication 4, dans lequel l'eau de refroidissement prélevée est transportée en circuit à travers un récipient collecteur (2) et un ou plusieurs filtres à membranes (5), dans lequel le transport du perméat depuis le ou les filtres à membranes (5) via le récipient à perméat (9) vers le circuit d'eau de refroidissement s'effectue au moyen d'une pompe (6), dans lequel la commande de la remise en circulation s'effectue au moyen d'une vanne à flotteur (20, 21) dans le récipient à perméat (9) et dans lequel une soupape anti-retour (21) ouvrant lors d'un dépassement de la pression dans le système d'eau de refroidissement est prévue dans la conduite de remise en circulation (10, 11).
